# EUROPÄISCHE PATENTSCHRIFT

(11) **EP 3 099 916 B1**
(45) Veröffentlichungstag und Bekanntmachung des Hinweises auf die Patenterteilung: **12.05.2021**
(21) Anmeldenummer: 15712034.6
(22) Anmeldetag: 30.01.2015
(51) Int. Cl.: F02D 41/30, F02D 41/34, F02B 23/10, F02B 33/04, F02F 1/22, F02D 41/08, F02D 41/38

(54) **VERFAHREN ZUM BETREIBEN EINES ZWEITAKT-OTTOMOTORS**
METHOD FOR OPERATING A TWO-STROKE OTTO CYCLE ENGINE
PROCÉDÉ DE FAIRE FONCTIONNER UN MOTEUR À DEUX TEMPS À ALLUMAGE COMMANDÉ

(30) Priorität: 30.01.2014 AT 500622014
(43) Veröffentlichungstag der Anmeldung: 07.12.2016
(73) Patentinhaber: Kirchberger, Roland, 8045 Graz (AT)
(72) Erfinder: Kirchberger, Roland, 8045 Graz (AT)
(74) Vertreter: Hübscher & Partner Patentanwälte GmbH
(86) Internationale Anmeldenummer: PCT/AT2015/050032
(87) Internationale Veröffentlichungsnummer: WO 2015/113096

(56) Entgegenhaltungen:
- EP-A1- 0 742 354
- WO-A1-2010/063048
- US-A- 5 222 481
- US-A1- 2002 011 223

## Beschreibung

Die Erfindung bezieht sich auf ein Verfahren zum Betreiben eines Zweitakt-Ottomotors mit wenigstens einem einen Kolben aufnehmenden Zylinder, mit einem Kurbelgehäuse, das mit dem Brennraum des Zylinders auf beiden Seiten einer durch die Achse eines Auslasskanals bestimmten Durchmesserebene des Zylinders über Überströmkanäle strömungsverbunden ist, und mit zwei beidseits der Durchmesserebene angeordneten Einspritzdüsen für Kraftstoff, deren Düsenachsen in der unteren Totpunktlage des Kolbens oberhalb des Kolbenbodens und zumindest angenähert in Ausströmrichtung der jeweils auf der gegenüberliegenden Seite der Durchmesserebene vorgesehenen Überströmkanäle verlaufen, wobei der Kraftstoff zumindest im Leerlauf je Arbeitszyklus nur über eine der Einspritzdüsen eingespritzt wird.

### Stand der Technik

Um eine entsprechende Verdampfung des Kraftstoffs auf dem heißen Kolbenboden von Zweitakt-Verbrennungsmotoren zu ermöglichen, ist es bekannt (EP 0 302 045 A2), den Kraftstoff mit Hilfe von Einspritzdüsen gegen den Kolbenboden zu spritzen, doch hat sich gezeigt, dass die innerhalb der Takte zur Verfügung stehende Zeit hiefür nicht ausreicht und daher die Nachteile der mit Kraftstoff benetzten Kolben- und Zylinderwandflächen insbesondere hinsichtlich der Kohlenwasserstoffemissionen durchschlagen. Zur Vermeidung dieser Nachteile wurde bereits vorgeschlagen (WO 2010/063048 A1), die Einspritzdüsen einander bezüglich einer durch die Achse eines Auslasskanals bestimmten Durchmesserebene des Zylinders symmetrisch gegenüberliegend so anzuordnen, dass sich Düsenachsen in der unteren Totpunktlage des Kolbens oberhalb des Kolbenbodens in der Durchmesserebene schneiden, und zwar auf der vom Auslasskanal abgewandten Seite der Zylinderachse. Da die Düsenachsen außerdem angenähert in Ausströmrichtung der jeweils auf der gegenüberliegenden Seite der Durchmesserebene vorgesehenen Überströmkanäle verlaufen, kann zwischen der in Richtung der Düsenachse eingespritzten Kraftstoffströmung und der aus dem jeweils gegenüberliegenden Überströmkanal in den Brennraum einströmenden Luft die aufgrund der entgegengerichteten Geschwindigkeitskomponenten jeweils größte Relativgeschwindigkeit für die Kraftstoffaufbereitung genützt werden, was im Zusammenwirken mit der Anordnungssymmetrie beim Einsatz beider Einspritzdüsen und damit im Bereich höherer Teillasten und im Volllastbetrieb zu einer vorteilhaften Gemischverteilung im Brennraum führt. In diesem Zusammenhang ist zu bedenken, dass die Kraftstoffstrahlen und die entgegengerichteten Luftströmungen oberhalb des Kolbenbodens aufeinandertreffen, was zu einer vom Kolbenboden weg gegen den Zylinderkopf gerichteten Strömung des sich bildenden Gemischs führt und daher eine Kohlenwasserstoffemissionen bedingende Benetzung des Kolbenbodens mit Kraftstoff verhindert. Der Schnittpunkt der Düsenachsen auf der vom Auslasskanal abgewandten Seite der Zylinderachse verlagert die für die Gemischaufbereitung wesentliche Auffächerung der eingespritzten Kraftstoffstrahlen mit Hilfe der durch die Überströmkanäle gegensinnig zum Kraftstoff eingeblasenen Luft in die vom Auslasskanal abgekehrte Zylinderhälfte, sodass Spülverluste weitgehend vermieden werden können.

Wird für den Leerlauf und den unteren Teillastbereich nur eine Einspritzdüse eingesetzt, so wird der Kraftstoff durch diese Einspritzdüse nicht in den Brennraum oberhalb des Kolbenbodens, sondern durch eine Mantelöffnung des Kolbens auf der der Einspritzdüse zugekehrten Umfangsseite in das Kurbelgehäuse eingespritzt. Durch die Strömungsbewegung im Kurbelgehäuse und an der Kolbenunterseite kommt es zu einer weitgehenden Gleichverteilung des eingespritzten Kraftstoffs und in Folge zu einem gleichmäßigen Eintrag des Kraftstoffluftgemischs durch die Überströmkanäle in den Brennraum des Zylinders. Damit kann auch im Leerlauf und im unteren Teillastbereich eine symmetrische Kraftstoffverteilung im Brennraum gewährleistet werden, allerdings mit allen durch eine Mantelöffnung im Kolben verbundenen Nachteilen hinsichtlich des Konstruktionsaufwands, der Kolbenfestigkeit und der Wärmeabfuhr über den Kolben auf den Zylinder. Dazu kommt, dass die Einbringung des Kraftstoffs in den Brennraum durch die Überströmkanäle ausschließlich von den Steuerzeiten der Überströmkanäle abhängt, was entsprechende Spülverluste bedingt.

### Darstellung der Erfindung

Der Erfindung liegt somit die Aufgabe zugrunde, den Betrieb eines Zweitakt-Ottomotors mit einer vorteilhaften Gemischaufbereitung sowohl im Vollastbereich als auch im Leerlauf oder im unteren Teillastbereich bei verringerten Kohlenwasserstoffemissionen und geringen Spülverlusten zu ermöglichen.

Ausgehend von einem Verfahren der eingangs geschilderten Art löst die Erfindung die gestellte Aufgabe durch die Merkmalskombination von Anspruch 1. Unter anderem wird dabei der Kraftstoff durch die im Leerlauf und im unteren Teillastbereich angesteuerte der beiden als Niederdruckdüsen ausgebildeten Einspritzdüsen mit vermindertem Impuls in den Brennraum des Zylinders eingespritzt.

Durch das Ansteuern lediglich einer Einspritzdüse im Leerlauf und im unteren Teillastbereich kann zunächst die für diese Motorbelastungen ausreichend kleine Kraftstoffmenge in einem zur Vermeidung von Kraftstoffspülverlusten günstigen Zeitfenster in den Brennraum des Zylinders eingespritzt werden. Da die Luftspülverluste davon nicht berührt werden, ergibt sich ein noch magereres Abgasgemisch im Auspuff, was wegen des erhöhten freien Sauerstoffanteils im Abgas in Verbindung mit einem Katalysator eine gute Wasserstoff-Kohlenstoff-Umsetzung ermöglicht. Trotz der unsymmetrischen Kraftstoffeinspritzung über nur eine der beiden Einspritzdüsen kann eine gute Gemischbildung und -verteilung im Brennraum aufrechterhalten werden, weil der Kraftstoff durch eine Niederdruckdüse mit vermindertem Impuls eingespritzt wird. Als Niederdruckdüsen werden dabei Einspritzdüsen verstanden, die mit einem Druck bis 50 bar beaufschlagt werden. Der eingespritzte Kraftstoff wird mit der durch die Überströmkanäle in den Brennraum einströmenden, vom Kolbenboden abhebenden Verbrennungsluft mitgerissen und verteilt sich vorteilhaft im Brennraum. Es können somit die Vorteile herkömmlicher Kolben ohne Mantelöffnung genützt werden, ohne Nachteile hinsichtlich der Gemischaufbereitung und der Emissionen im Leerlauf und im unteren Teillastbereich in Kauf nehmen zu müssen.

Damit vorteilhafte Druckverhältnisse für die Kraftstoffeinspritzung genützt werden können, liegen die Durchtrittsöffnungen in der Zylinderwand für die Kraftstoffeinspritzung in den Brennraum unterhalb der Steuerkante des Auslasskanals, sodass die Einspritzdüsen nur mit den geringen Drücken am Ende der Expansionsphase belastet und vor Verbrennungsrückständen durch Ablagerungen bewahrt werden.

Erfindungsgemäß ist es für Kraftstoffverteilung im Brennraum des Zylinders vorteilhaft, dass sich die Düsenachsen auf der vom Auslasskanal abgewandten Seite der Zylinderachse in der durch den Auslasskanal bestimmten Durchmesserebene des Zylinders schneiden. Eine Hauptströmung des Kraftstoff-Luftgemischs in dieser Durchmesserebene wäre zu erreichen. In diesem Zusammenhang ist zu beachten, dass auch die rückladende Welle des Auspuffs wie die Spülstrahlen zur Kraftstoffverteilung im Brennraum genützt werden kann. Allerdings werden die günstigsten Einspritzbedingungen erzielt, wenn der Kraftstoff entlang der einander in der Durchmesserebene schneidenden Düsenachsen in den Brennraum eingespritzt wird. Erfindungsgemäß wird der Kraftstoff durch die im Leerlauf und im unteren Teillastbereich angesteuerte Einspritzdüse in einem Kurbelwinkelbereich eingespritzt, in dem sich der Kolbenboden unterhalb des Schnittpunkts der Düsenachsen bewegt.

Besonders günstige Verfahrensbedingungen ergeben sich, wenn die beiden Einspritzdüsen im Leerlauf und im unteren Teillastbereich zumindest in aufeinanderfolgenden Arbeitszyklusgruppen, bevorzugt in aufeinanderfolgenden Arbeitszyklen, abwechselnd angesteuert werden, weil die abwechselnde Beaufschlagung der Einspritzdüsen zu einem gleichmäßigen Verschleiß dieser Einspritzdüsen führt. Außerdem wird die Verkokungsgefahr deutlich herabgesetzt. Dies ist in Verbindung mit einem geschlossenen Kolbenmantel im Hinblick auf den Umstand von Bedeutung, dass bei geschlossenem Kolbenmantel die Kühlung der Düsenspitzen über das Kurbelgehäuse wegen der fehlenden Mantelöffnung weitgehend entfällt. Außerdem führt eine abwechselnde Beaufschlagung der beiden Einspritzdüsen zu einer gleichmäßigeren Wärmeverteilung im Zylinder und unterstützt somit eine symmetrische Spülung.

Hinsichtlich der Kraftstoffverteilung beim Einspritzen des Kraftstoffs in den Brennraum des Zylinders bringen Mehrlochdüsen Vorteile aufgrund der möglichen Sprühverteilung des eingespritzten Kraftstoffs mit sich, was sich insbesondere bei einer einseitigen Kraftstoffeinspritzung mit vermindertem Impuls günstig auf die Gemischverteilung im Brennraum auswirkt. Diese Mehrlochdüsen spritzen nämlich den Kraftstoff bei geringen Einspritzmengen trotz gleichbleibender Druckbeaufschlagung mit einem deutlich niedrigeren Impuls in den Brennraum, sodass es hierfür keiner Drucksteuerung bedarf, wiewohl durch eine Steuerung des Beaufschlagungsdrucks eine genauere Anpassung an die jeweiligen Anforderungen möglich wäre.

### Kurze Beschreibung der Zeichnungen

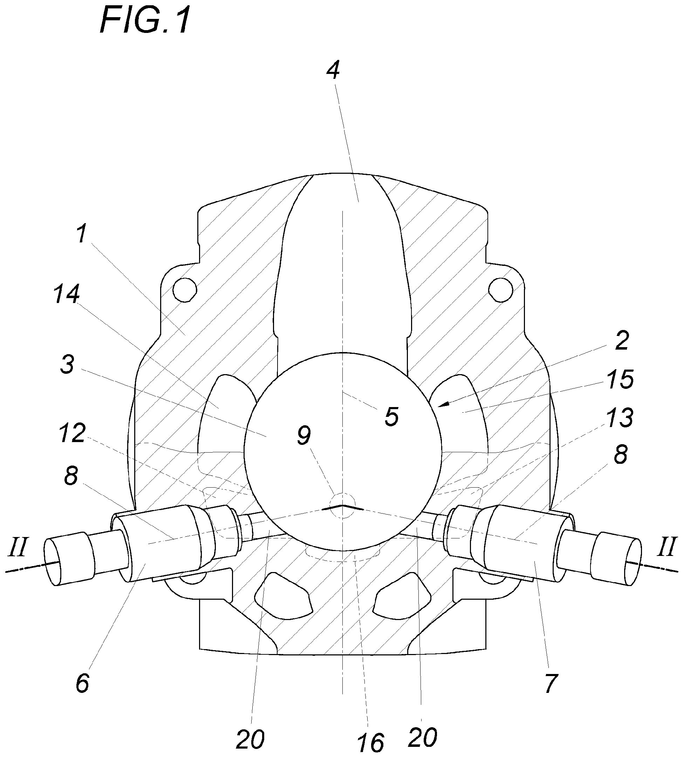

In der Zeichnung ist der Erfindungsgegenstand beispielsweise dargestellt. Es zeigen
- Fig. 1: einen erfindungsgemäßen Zweitakt-Ottomotor in einem Querschnitt im Bereich der Ausströmöffnungen der Überströmkanäle,
- Fig. 2: einen Schnitt nach der Linie II-II der Fig. 1,
- Fig. 3: einen Schnitt nach der Linie III-III der Fig. 2 und
- Fig. 4: einen Schnitt nach der Linie IV-IV der Fig, 2.

### Weg zur Ausführung der Erfindung

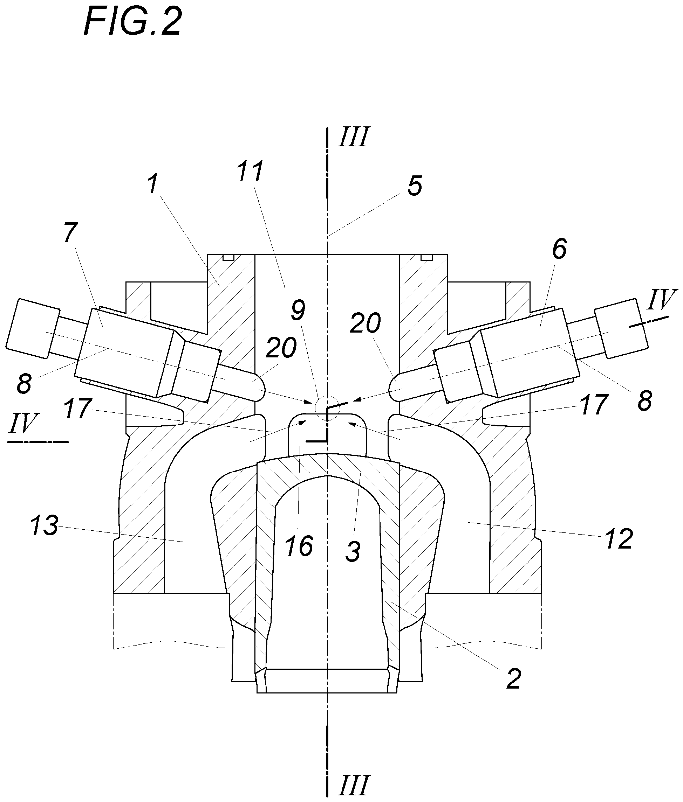

Vom Motorblock eines Zweitakt-Ottomotors ist in der Zeichnung lediglich ein Zylinder 1 ohne Zylinderkopf angedeutet. Der in der unteren Totpunktlage gezeichnete Kolben ist mit 2 bezeichnet und weist einen Kolbenboden 3 auf. Auf der dem Auslasskanal 4 gegenüberliegenden Zylinderseite sind symmetrisch zu einer durch die Achse des Auslasskanals 4 bestimmten Durchmesserebene 5 zwei Einspritzdüsen 6, 7 vorgesehen, deren Düsenachsen 8 sich in der Durchmesserebene 5 schneiden, und zwar in einem Schnittpunkt 9, der in der gezeichneten unteren Totpunktlage des Kolbens 2 oberhalb des Kolbenbodens 3 liegt, wie dies insbesondere der Fig. 2 entnommen werden kann.

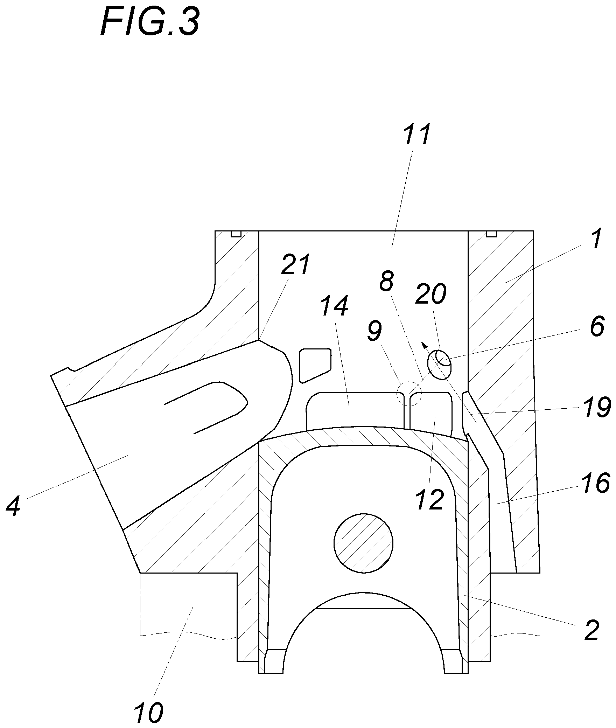

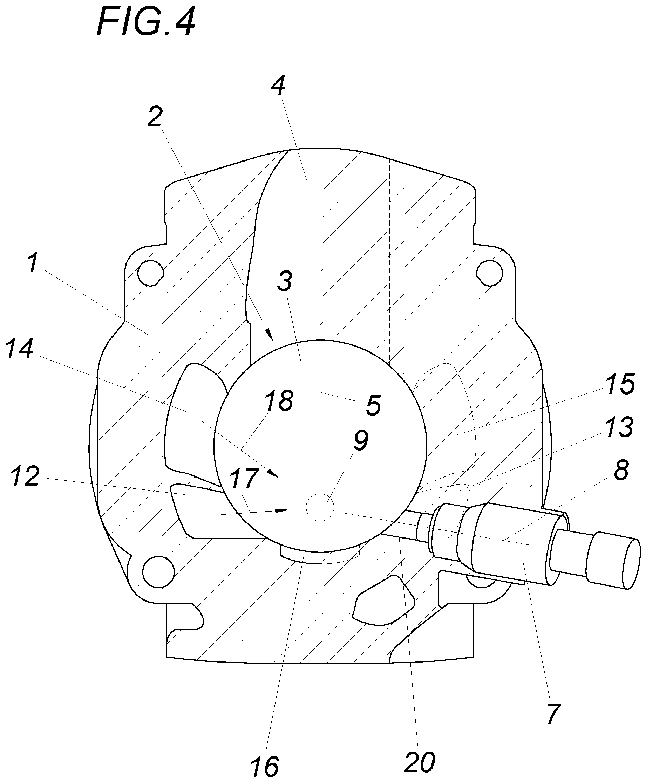

Zwischen dem lediglich strichpunktiert angedeuteten Kurbelgehäuse 10 und dem Verbrennungsraum 11 des Zylinders 1 sind einander paarweise gegenüberliegende, symmetrisch zur Durchmesserebene 5 angeordnete Überströmkanäle 12, 13 und 14, 15 vorgesehen. Zusätzlich weist der Zylinder 1 einen dem Auslasskanal 4 diametral gegenüberliegenden Überströmkanal als Aufrichtkanal 16 auf, der zwischen den Einspritzdüsen 6, 7 in den Verbrennungsraum 11 mündet, wie dies insbesondere der Fig. 3 entnommen werden kann. Die Anordnung ist dabei so getroffen, dass die Düsenachsen 8 im Wesentlichen den beiden auf der bezüglich der Durchmesserebene 5 gegenüberliegenden Zylinderseite mündenden Überströmkanäle 12, 13 bzw. 14, 15 entgegengerichtet ist, dass also die Ausströmrichtungen 17, 18 der Überströmkanäle in Richtung der Düsenachse 8 der jeweils gegenüberliegenden Einspritzdüsen 6, 7 verlaufen, wie dies aus der Fig. 4 hervorgeht. Durch diese Maßnahme wird in Verbindung mit Einspritzdüsen 6, 7 in Form von Mehrlochdüsen eine vorteilhafte Auffächerung der eingespritzten Sprühkegel des Kraftstoffs und damit eine feine Verteilung des Kraftstoffs innerhalb der Gasströmung erreicht, weil aufgrund der den Kraft-Sprühkegeln entgegengerichteten Luftströmung aus den jeweils gegenüberliegenden Überströmkanälen die höchste Relativgeschwindigkeit zwischen dem eingespritzten Kraftstoff und der Luftströmung für die Kraftstoffverteilung genützt werden kann. Die Ausrichtung der Düsenachsen 8 in der Weise, dass deren Schnittpunkt 9 in der unteren Totpunktlage des Kolbens 2 oberhalb des Kolbenbodens 3 zu liegen kommt, verhindert eine Benetzung des Kolbenbodens mit Kraftstoff, der durch die über die Überströmkanäle 12, 13 bzw. 14, 15 in den Verbrennungsraum 11 eingeblasene Frischluft gegen den Zylinderkopf weg vom Kolbenboden 3 mitgerissen wird, was eine vorteilhafte Kraftstoffverteilung im Verbrennungsraum 11 nach sich zieht, insbesondere, wenn die Ausströmrichtung 19 des Aufrichtkanals 16 oberhalb des Schnittpunkts 9 der Düsenachsen 8 verläuft (Fig. 3), weil in diesem Fall die Frischluft aus dem Aufrichtkanal 16 auf die Sprühkegeln des Kraftstoffs auftrifft, bevor sich die Hauptströme der Sprühkegel aus den beiden Einspritzdüsen 6, 7 vereinigen, sodass die Ableitung des Kraftstoffs vom Kolbenboden 3 bereits durch die Luftströmung aus dem Aufrichtkanal 16 eingeleitet und unterstützt wird. Der Gefahr, dass Kraftstoff teilweise mit dem Abgas durch den Auslasskanal 4 ausgetragen wird, wird dadurch begegnet, dass der Schnittpunkt 9 der Düsenachsen 8 auf der dem Auslasskanal 4 abgewandten Seite der Zylinderachse liegt und folglich die entstehenden Gastströmungen den über die Einspritzdüsen 6, 7 eingespritzten Kraftstoff vom Auslasskanal 4 weg gegen den Zylinderkopf hin mitreißen.

Damit vorteilhafte Druckverhältnisse für die Kraftstoffeinspritzung genützt werden können, liegen die Durchtrittsöffnungen 20 in der Zylinderwand für die Kraftstoffeinspritzung in den Brennraum 11 unterhalb der Steuerkante 21 des Auslasskanals 4, sodass die Einspritzdüsen 6, 7 nur mit den geringen Drücken am Ende der Expansionsphase belastet und vor Verbrennungsrückständen durch Ablagerungen bewahrt werden, weil die hierfür erforderliche Verkokungstemperatur durch die über den Aufrichtkanal 16 einströmende und die heißen Abgase aus dem Düsenbereich verdrängende Frischluft nicht erreicht wird.

Im Leerlauf und im unteren Teillastbereich wird jeweils nur eine der beiden Einspritzdüsen 6, 7 eingesetzt, um eine ausreichend kleine Kraftstoffmenge in den Brennraum 11 einzuspritzen. Damit trotz der einseitigen Ansteuerung der Einspritzdüsen 6, 7 eine vorteilhafte Kraftstoffverteilung im Verbrennungsraum 11 sichergestellt werden kann, wird der Kraftstoff durch die jeweils angesteuerte Einspritzdüse 6 oder 7 mit einem verminderten Impuls in den Brennraum 11 eingespritzt, und zwar in einem Kurbelwinkelbereich, in dem sich der Kolbenboden 3 unterhalb des Schnittpunkts 9 bewegt, sodass der mit vermindertem Impuls in den Brennraum 11 eingespritzte Kraftstoff nicht nur nicht den Kolbenboden benetzen, sondern vielmehr mit der über die Überströmkanäle eingeblasenen Frischluft unter einer innigen Mischung mit den Frischluftströmen vom Kolbenboden 3 weg gegen den Zylinderkopf mitgerissen wird, was eine weitgehend gleichmäßige Kraftstoffverteilung im Brennraum 11 zur Folge hat, weil eben wegen des verminderten Impulses der einseitig eingespritzte Kraftstoff auch ohne Einwirkung der gegengerichteten Kraftstoffeintragung durch die zweite Einspritzdüse frühzeitig durch die Frischluftströmung mitgerissen werden kann.

Dies bedeutet, dass im Leerlauf und im unteren Teillastbereich kurze Einspritzintervalle sichergestellt werden können, ohne eine Emissionserhöhung aufgrund einer sich verschlechternden Gemischbildung und -verteilung befürchten zu müssen. Im Gegenteil, es werden die Kraftstoffverluste während der Spülung merklich verringert, was einen für nachgeschaltete Katalysatoren vorteilhaften, höheren Sauerstoffanteil in den Abgasen nach sich zieht.

## Patentansprüche

1. Verfahren zum Betreiben eines Zweitakt-Ottomotors mit wenigstens einem einen Kolben (2) aufnehmenden Zylinder (1), mit einem Kurbelgehäuse (10), das mit dem Brennraum (11) des Zylinders (1) auf beiden Seiten einer durch die Achse eines Auslasskanals (4) bestimmten Durchmesserebene (5) des Zylinders (1) über Überströmkanäle (12, 13, 14, 15, 16) strömungsverbunden ist, und mit zwei beidseits der Durchmesserebene (5) angeordneten Einspritzdüsen (6, 7) für Kraftstoff, deren Düsenachsen (8) in der unteren Totpunktlage des Kolbens (2) oberhalb des Kolbenbodens (3) und zumindest angenähert in Ausströmrichtung (17, 18) der jeweils auf der gegenüberliegenden Seite der Durchmesserebene (5) vorgesehenen Überströmkanäle (12, 14; 13, 15) verlaufen, wobei der Kraftstoff im Leerlauf und im unteren Teillastbereich je Arbeitszyklus nur über eine der Einspritzdüsen (6, 7) eingespritzt wird, wobei die Düsenachsen (8) der beiden Einspritzdüsen (6, 7) einander auf der vom Auslasskanal (4) abgewandten Seite der Zylinderachse in der Durchmesserebene (5) schneiden, **dadurch gekennzeichnet, dass** die beiden Einspritzdüsen als Niederdruck- und Mehrlochdüsen ausgebildet sind, und dass der Kraftstoff durch die im Leerlauf und im unteren Teillastbereich angesteuerte Einspritzdüse (6, 7) in einem Kurbelwinkelbereich, in dem sich der Kolbenboden (3) unterhalb des Schnittpunkts (9) der Düsenachsen (8) bewegt, derart mit vermindertem Impuls in den Brennraum (11) des Zylinders (1) eingespritzt wird, dass der in den Brennraum (11) eingespritzte Kraftstoff mit der über die Überströmkanäle (12, 14; 13, 15) eingeblasenen Frischluft unter einer innigen Mischung mit den Frischluftströmen vom Kolbenboden (3) weg gegen den Zylinderkopf mitgerissen wird.

2. Verfahren nach Anspruch 1, **dadurch gekennzeichnet, dass** der Kraftstoff in den Brennraum (11) durch Durchtrittsöffnungen (20) in der Zylinderwand eingespritzt wird, die unterhalb der Steuerkante (21) des Auslasskanals (4) vorgesehen sind.

3. Verfahren nach Anspruch 1 oder 2, **dadurch gekennzeichnet, dass** die beiden Einspritzdüsen (6, 7) im Leerlauf und im unteren Teillastbereich zumindest in aufeinanderfolgenden Arbeitszyklusgruppen abwechselnd angesteuert werden.

## Claims

1. Method for operating a two-stroke Otto engine comprising at least one cylinder (1) which receives a piston (2), comprising a crank housing (10) which is fluidically connected via overflow channels (12, 13, 14, 15, 16) to the combustion chamber (11) of the cylinder (1) on both sides of a diameter plane (5) of the cylinder (1) which is determined by the axis of an outlet channel (4), and comprising two injection nozzles (6, 7) for fuel which are arranged on both sides of the diameter plane (5) and of which the nozzle axes (8) extend in the bottom dead centre position of the piston (2) above the piston crown (3) and at least approximately in the outflow direction (17, 18) of the overflow channels (12, 14; 13, 15) which are each provided on the opposite side of the diameter plane (5), wherein the fuel is injected during idling and in the lower partial load range per working cycle only via one of the injection nozzles (6, 7), wherein the nozzle axes (8) of the two injection nozzles (6, 7) intersect on the side of the cylinder axis, remote from the outlet channel (4), in the diameter plane (5), **characterised in that** the two injection nozzles are designed as low pressure nozzles and multi-hole nozzles, and **in that** the fuel is injected through the injection nozzle (6, 7), which is activated during idling and in the lower partial load range, in a crank angle range, in which the piston crown (3) moves below the intersection point (9) of the nozzle axes (8), with reduced momentum into the combustion chamber (11) of the cylinder (1) such that the fuel injected into the combustion chamber (11) is entrained with the fresh air, which is blown in via the overflow channels (12, 14; 13, 15), thus being intimately mixed with the fresh air streams, away from the piston crown (3) towards the cylinder head.

2. Method as claimed in claim 1, **characterised in that** the fuel is injected into the combustion chamber (11) through passage openings (20 in the cylinder wall which are provided below the control edge (21) of the outlet channel (4).

3. Method as claimed in claim 1 or 2, **characterised in that** the two injection nozzles (6, 7) are activated, during idling and in the lower partial load range, in an alternating manner at least in consecutive working cycle groups.

## Revendications

1. Procédé pour actionner un moteur à explosion à deux temps avec au moins un cylindre (1) recevant un piston (2), avec un carter (10) qui est en communication fluide, par le biais de canaux de trop-plein (12, 13, 14, 15, 16), avec la chambre de combustion (11) du cylindre (1) de part et d'autre d'un plan diamétral (5) du cylindre (1) défini par l'axe d'un canal d'évacuation (4), et avec deux buses d'injection (6, 7) disposées de part et d'autre du plan diamétral (5) pour le carburant, dont les axes de buse (8) courent dans la position de point mort du piston (2) au-dessus du corps de piston (3) et au moins approximativement dans le sens d'écoulement (17, 18) des canaux de trop-plein (12, 14 ; 13, 15) prévus sur la face opposée du plan diamétral (5), dans lequel, au point mort et dans la zone de charge inférieure de chaque cycle de fonctionnement, le carburant est injecté uniquement par une des buses d'injection (6, 7), les axes de buse (8) des deux buses d'injection (6, 7) se croisant sur la face de l'axe du cylindre opposée au canal d'évacuation (4), dans le plan diamétral (5), **caractérisé en ce que** les deux buses d'injection sont configurées comme des buses à basse pression et à trous multiples, et que le carburant est injecté à travers les buses d'injection (6, 7) commandées au point mort et dans la zone de charge inférieure sur une plage d'angle de vilebrequin dans laquelle le corps de piston (3) se déplace au-dessous du point d'intersection (9) des axes de buse (8), de telle sorte qu'avec une impulsion réduite dans la chambre de combustion (11) du cylindre (1), le carburant injecté dans la chambre de combustion (11) est entraîné avec l'air frais insufflé par les canaux de trop-plein (12, 14 ; 13, 15) et mélangé intimement avec les flux d'air frais du corps de piston (3) contre la tête de cylindre.

2. Procédé selon la revendication 1, **caractérisé en ce que** le carburant est injecté dans la chambre de combustion (11) à travers des orifices de passage (20) dans la paroi du cylindre qui sont prévus au-dessous de l'arête de commande (21) du canal d'évacuation (4).

3. Procédé selon la revendication 1 ou 2, **caractérisé en ce que** les deux buses d'injection (6, 7), au point mort et dans la zone de charge inférieure, sont commandées alternativement au moins dans des groupes de cycles de travail successifs.
